# EUROPEAN PATENT SPECIFICATION

(11) **EP 2 932 062 B1**
(45) Date of publication and mention of the grant of the patent: **09.01.2019**
(21) Application number: 13866205.1
(22) Date of filing: 25.11.2013
(51) Int. Cl.: F01P 7/16, G05D 23/02, F16K 31/00, F16K 27/02

(54) **THERMOSTAT ARRANGEMENT AND COOLING SYSTEM**
THERMOSTATANORDNUNG UND KÜHLSYSTEM
AGENCEMENT DE THERMOSTAT ET SYSTÈME DE REFROIDISSEMENT

(30) Priority: 17.12.2012 SE 1251428
(43) Date of publication of application: 21.10.2015
(73) Proprietor: Scania CV AB, 151 87 Södertälje (SE)
(72) Inventor: KARDOS, Zoltan, S-151 35 Södertälje (SE)
(74) Representative: Scania CV AB
(86) International application number: PCT/SE2013/051383
(87) International publication number: WO 2014/098710

(56) References cited:
- WO-A1-2012/091658
- DE-B- 1 035 408
- DE-B- 1 057 826
- DE-B- 1 057 826
- FR-A1- 2 456 838
- JP-A- S54 134 827
- JP-A- 2009 097 352
- JP-A- 2010 249 143
- US-A- 5 690 276

## Description

### TECHNICAL FIELD AND PRIOR ART

The present invention relates to a thermostat arrangement according to the preamble to claim 1 and a cooling system according to the preamble to the attached independent cooling system claims.

The invention is directed in particular, but not exclusively, to a thermostat arrangement for a cooling system for motor vehicles in the form of wheeled working vehicles, such as lorries and buses, although all types of motor vehicle, such as cars, boats and similar, are included.

The invention is not limited, either, to thermostat arrangements for a cooling system for the cooling of a certain type of combustion engine, and non-exhaustive examples of such possible engines are Otto engines, diesel engines and gas engines.

In order to regulate the temperature of the cooling fluid in a cooling system that cools a combustion engine of a motor vehicle, a thermostat arrangement is often used that comprises a temperature-dependent activation element with a wax body. Depending on the temperature of the cooling fluid, the thermostat arrangement leads cooling fluid that flows out from the combustion engine to a cooler in order to be cooled in the same, before the cooling fluid is returned to the combustion engine or directly back to the combustion engine without passage through the cooler. When the thermostat arrangement changes the distribution of the flow between passing from there to the cooler and passing directly back to the combustion engine without passage through the cooler, the temperature of the cooler elements, such as lamellae of aluminium, in the cooler will vary. Such cycling of temperature fatigues the cooler elements, and this has a directly significant influence on the lifetime of the coolers. The cooling fluid elements are particularly sensitive to rapid rises in temperature due to the fact that cooling fluid is suddenly led into the cooler, starting from a condition in which the complete flow of cooling fluid passes the cooler.

JP 2010249143 describes a thermostat arrangement with means whose object is to achieve a stabilised opening of a connection between the inlet channel of the thermostat arrangement and the outlet channel to the cooler in order to avoid violent temperature shocks to the cooler. Even if this design of the thermostat arrangement has an effect that extends its lifetime, it does not in any way constitute a complete solution to the problem described above.

US5690276A describes a thermostat having a main valve and a secondary valve both of which are biased closed by a single coiled compression spring and opened by a single piston. The entrance to the channel of the secondary valve is maintained at a maximum dimension of approximately 0.015 inches in order to keep undesirable particulate matter out of the valve. The surfaces within the valve channel encourage laminar flow which increases the volume of flow which can be passed through the valve while keeping the total surface area of the valve small.

DE1057826B describes a thermostatically controlled valve for cooling water circulation of internal combustion engines in which a valve seat and a valve disc forms an annular gap.

### SUMMARY OF THE INVENTION

The object of the present invention is to achieve a thermostat arrangement of the type specified above with a new and advantageous design according to claim 1 of the present invention.

This object is achieved according to the invention though providing such a thermostat arrangement in which the two plate elements are designed such that in the event of displacement away from the said position of contact they form the said connection in the form of a section of channel defined by surfaces of the two plate elements that face each other and that demonstrate flow-retarding shapes.

Through such a section of channel defined by surfaces of this type being formed when the thermostat arrangement opens for flow towards the cooler, the friction for the cooling fluid will be large during the opening phase, which leads to an initially increased fall in pressure and thus a reduced initial flow, when compared with previously known thermostat arrangements of this type. This means that the thermostat arrangement will be forced to open more widely and it thus begins to regulate when in its open condition, rather than continuously opening and closing. Consequently, the increase of flow to the cooler will be slower and the load on the cooler will in this way be lower than it is in previously known thermostat arrangements. In contrast to the latter arrangements the valve body of the thermostat arrangement will not return fully to the closed condition: it will tend to regulate between open conditions that are open to different degrees, rather than regulating between a closed condition with zero flow and an open condition with a high flow to the cooler. This means that the lifetime of the various components in a cooling system, in particular of the components of the cooler, will be considerably extended.

According to one embodiment of the invention, the said surfaces of the plate elements have been given a profile such that they force the flow of cooling fluid close to them to change direction when the said connection is open. The friction for the cooling fluid is in this way efficiently increased and thus the flow will initially be reduced during the opening process.

According to a further embodiment of the invention, the said flow-retarding shapes comprise in the said condition of contact surfaces that essentially follow each other. The said surfaces advantageously define in this way an extent of the section of channel that forms the said connection that extends the flow pathway. This means that an increase in the flow of cooling fluid to the cooler during the phase of opening the said connection will take place considerably more slowly than would be the case if the said flow pathway had been shorter. The extent of the said section of channel at the beginning of a displacement of the plate elements away from the said condition of contact is thus advantageously at least twice, 2-6 times, or 2-4 times longer than the length of a straight line between opposite ends of the section of channel. A significant extension of the flow pathway can in this way achieved that has such a positive influence on making more gentle the cycling of temperature, without requiring any significantly increased volume of the thermostat arrangement.

According to a further embodiment of the invention, the said surfaces of the plate elements demonstrate waveforms that essentially follow each other at the condition of contact in order to form during the opening phase of the opening of the said connection a wave-shaped meandering section of channel between the inlet channel and the first outlet channel. This is an advantageous manner of achieving a thermostat arrangement with the advantageous distinctive features described above.

According to a further embodiment of the invention, at least one of the said surfaces demonstrates a flow-retarding form in the form of a protrusion that extends towards the second surface, which constitutes a possible alternative to achieving the flow-retarding form of the said surfaces.

According to a further embodiment of the invention, the valve body comprises a second valve device that can be received at a second end position of the valve body into a second valve seating in order in this way to prevent cooling fluid from flowing from the said inlet channel to the second outlet channel. All cooling fluid can in this way be guided onwards from the thermostat arrangement to the cooler in the case in which the requirement for cooling of the combustion engine is large.

According to a further embodiment of the invention, the valve body can be displaced from the said first end position in the direction away from it under the influence of the activation element, and against the influence of the spring force of a spring means that acts upon the valve body, and the activation element advantageously comprises a wax body.

The invention concerns also a cooling system and a motor vehicle according to the corresponding attached claims.

Other advantages and an advantageous distinctive feature of the invention are made clear by the description below.

### BRIEF DESCRIPTION OF DRAWINGS

The invention will be described in more detail below with the aid of embodiments presented as examples, with reference to the attached drawings, of which:
- Figure 1: is a side view of a thermostat arrangement of the type according to the invention,
- Figure 2: is a partially cut-away view of a thermostat arrangement according to one embodiment of the invention,
- Figure 3: is a diagram that shows the flow through a thermostat arrangement according to Figure 2 as a function of the time of the establishment of a connection between the inlet channel and the outlet channel to the cooler, compared with that of a previously known thermostat arrangement, and
- Figure 4: is a sketch of the principle of a cooling system comprising a thermostat arrangement according to the invention.

### DETAILED DESCRIPTION OF AN EMBODIMENT OF THE INVENTION

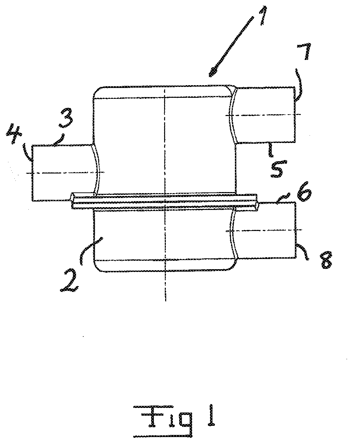

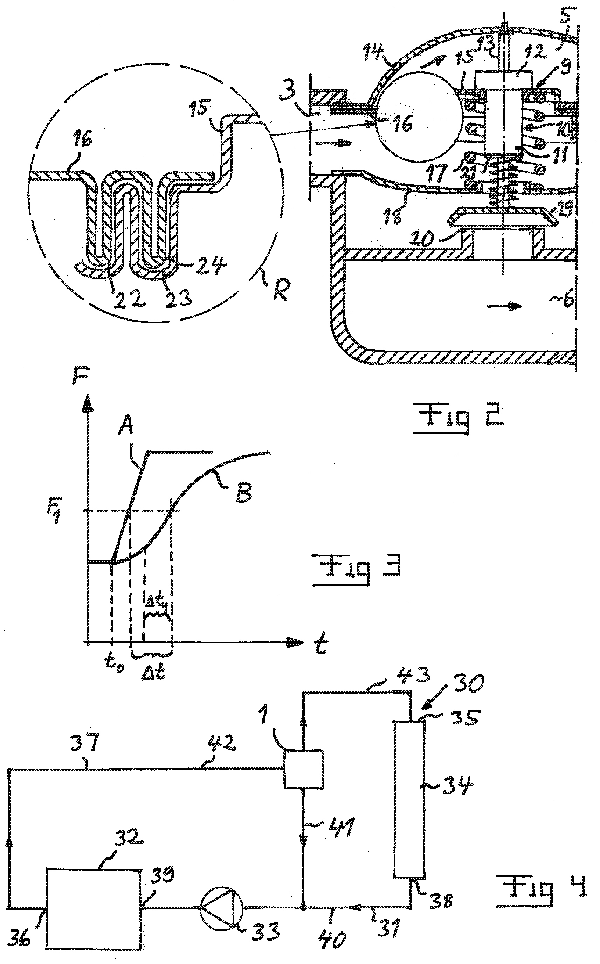

Figures 1 and 2 illustrate a thermostat arrangement 1 according to one embodiment of the present invention. This thermostat arrangement 1 is intended to be a component of a cooling system in a motor vehicle, for example a cooling system 30 of the type illustrated in Figure 4. The thermostat arrangement 1 comprises a thermostat housing 2. An inlet channel 3 for the reception of cooling fluid that circulates around a combustion engine of the motor vehicle is arranged in the thermostat housing 2. This inlet channel 3 is intended to be connected to a line of the said cooling system such that it can receive through an inlet opening 4 arranged in the thermostat housing 2 cooling fluid from this line. Furthermore, a first outlet channel 5 and a second outlet channel 6 are arranged in the thermostat housing 2. These two outlet channels 5, 6 are connected to the inlet channel 3. Cooling fluid is intended to be led from the first outlet channel 5 from the thermostat arrangement 1 to a cooler of the said cooling system, and cooling fluid is intended to be returned from the second outlet channel 6 to the combustion engine without passage through the said cooler. The first outlet channel 5 is intended to be connected to a line of the said cooling system such that it will be able to discharge through a first outlet opening 7 arranged in the thermostat housing 2 cooling fluid to this line, while the second outlet channel 6 is intended to be connected to a second line in the said cooling system in order to be able to discharge through a second outlet opening 8 arranged in the thermostat housing 2 cooling fluid to the most recently mentioned line.

A valve body 9 is arranged such that it can be displaced in the thermostat housing 2 between different positions for the regulation of the flow of cooling fluid from the inlet channel 3 to the outlet channels 5, 6 (see Figure 2). The thermostat arrangement demonstrates a temperature-dependent activation element 10 that comprises a wax body 11 arranged to be met by the flow of cooling fluid that enters the thermostat housing through the inlet channel 3. The wax body 11 is connected to a part 12 that can be displaced arranged such that it can be displaced along a rod 13 fixed into a yoke 14 that is fixed in the thermostat housing, such that during displacement of the same it carries with it the valve body 9.

The valve body demonstrates a first valve device, partially shown in enlargement through the ring R, in the form of a first plate element 15, that at a first end position of the valve body is in contact with a valve seating between the inlet channel 3 and the second plate element 16 that forms the first outlet channel 5 such that it through this contact prevents cooling fluid from flowing from the inlet channel 3 to the first outlet channel 5. The plate element 16 has a fixed position inside the thermostat housing. A spring means 17 in the form of a spring is arranged to act between a part 18 fixed to the housing and the first plate element 15 in order to influence the valve body to be displaced towards the said first end position.

The valve body comprises further a second valve device 19 that can be received at a second end position of the valve body into a second valve seating 20 in order in this way to prevent cooling fluid from flowing from the inlet channel 3 to the second outlet channel 6.

The general function of a thermostat arrangement of this type is as follows: When the wax body 11 has been heated to its melting temperature under the influence of heat from the cooling fluid that flows into the thermostat housing through the inlet channel 3 the wax body will start to melt. As the wax body 11 melts, it increases in volume and exerts in this way a force of pressure onto a part 21 that contains it, such that this is displaced together with the displaceable part 12 that takes with it the valve body 9 against the influence of the spring means 17. The valve body 9 is in this way displaced from the said first end position in the direction towards the said second end position, i.e. the first plate element 15 is moved away from its contact with the second plate element 16 and the second valve device 16 in the direction towards the seating 20. The valve body is at the second end position when essentially the complete wax body 11 has melted. When the wax body 11 has subsequently cooled, as a result of a lowered temperature of the cooling fluid that flows into through the inlet channel 3, to a temperature that lies below the said melting temperature, the wax body will start to solidify. As the wax body solidifies its volume becomes smaller, whereby the part 21 together with the displaceable part 12 and the valve body 9 are displaced in the opposite direction through the influence of the spring means 17.

It is the design of the said first valve device formed from the two plate elements 15, 16 that is characteristic for the present invention, and this will now be described. These two plate elements 15, 16 are designed such that during displacement of the same away from the position in which they are in contact at the first end position they form a connection between the inlet channel 3 and the first outlet channel 5 in the form of a section 22 of channel defined by two surfaces 23, 24 of the two plate elements, which surfaces face each other and demonstrate flow-retarding shapes. The flow-retarding shapes of these surfaces are formed in the embodiment that is shown through these surfaces having been designed such that they form during the opening phase of the opening of the said connection a wave-shaped meandering section of channel between the inlet channel 3 and the first outlet channel 5. This can be described also as a labyrinthine connection during this phase being formed between the inlet channel 3 and the first outlet channel 5.

The function that is achieved by the thermostat arrangement according to the invention through the design of the two plate elements 15, 16 that has just been described will now be described with reference to also Figure 3, which shows how the flow F through the thermostat arrangement develops with the time t of opening of a connection between the inlet channel and the outlet channel that leads to the cooler, based on the time point to of a previously known thermostat arrangement (Curve A) and a thermostat arrangement according to Figure 2 (Curve B). It is made clear that the relatively long pathway that the fluid must flow in the said section 22 of channel on opening will lead to a relatively large fall in pressure from one end of the section of channel to its second end, such that the flow will initially decrease and it will take a significantly longer time (Δ t) before the flow has reached a certain level F₁ than for a previously known thermostat arrangement. This means that opening, and closing, of the connection between the inlet channel 3 and the first outlet channel 5 that leads to the cooler in the thermostat arrangement according to the invention will take place in a significantly more gentle manner than in previously known thermostat arrangements, such that variations in temperature in a cooler connected to it will be significantly slower. This will result in the lifetime of the latter being able to be considerably extended. It is even the case that when the engine of the motor vehicle has been taken into operation and the first valve device has opened that the thermostat arrangement will rather regulate the flow between the said inlet channel 3 and the first outlet channel 5 in its open condition, such as, for example, within the region specified by Δ t₁ in Figure 3, rather than continuously opening and closing. This means in practice that while in a previously known thermostat arrangement the range of regulation could be that the valve body is displaced within an interval between 0 and 1 mm from the said first end position, this interval may instead extend between 2 and 6 mm from the first end position in the arrangement according to the invention.

Figure 4 shows schematically a cooling system 30 according to the present invention, intended for a motor vehicle. This cooling system 30 comprises a cooling circuit 31 for the cooling of a combustion engine 32 in the vehicle by means of a cooling fluid that flows around the cooling circuit, preferably in the form of water, possibly with the addition of additives such as glycol, to depress the freezing point. A cooling fluid pump 33 is connected into the cooling circuit 31 in order to circulate the cooling fluid in the cooling circuit. Furthermore, a cooler 34 in the form of, for example, a conventional cooling fluid cooler is connected into the cooling circuit 31 for the cooling of the said cooling fluid. This cooler 34 comprises a cooling fluid inlet 35 that is connected to a cooling fluid outlet 36 of the combustion engine 32 through a first line 37 of the cooling circuit and a cooling fluid outlet 38 that is connected to a cooling fluid inlet 39 of the combustion engine 32 through a second line 40 of the cooling circuit. The first line 37 is connected to the second line 40 through a third line 41 in the cooling circuit. This third line 41 is connected to the second line 40 in order to allow cooling fluid to be returned from the cooling fluid outlet 36 of the combustion engine to the cooling fluid inlet 39 of the combustion engine without passing through the cooler 34. Thus, the third line 41 constitutes a bypass line, through which the cooling fluid that circulates in the cooling circuit 31 can be led past the cooler 34 during its passage between the cooling fluid outlet 36 and the cooling fluid inlet 39 of the combustion engine 32. The cooling fluid is circulated between the cooling fluid inlet 39 and the cooling fluid outlet 36 of the combustion engine through cooling fluid channels within the combustion engine during which it absorbs heat from the combustion engine.

A thermostat arrangement 1 according to the invention of the type described above is connected into the cooling circuit 31 in such a manner that:
- the inlet channel 3 of the thermostat arrangement is connected to the cooling fluid outlet 36 of the combustion engine 32 through a first section 42 of line of the first line 37,
- the first outlet channel 5 of the thermostat arrangement is connected to the cooling fluid inlet 35 of the cooler 34 through a second section 43 of line of the first line 37, and
- the second outlet channel 6 of the thermostat arrangement is connected to the third line 41.

The function of this cooling system is made as clear as can be desired by the description above of an embodiment of the thermostat arrangement according to the invention.

The invention is, naturally, not in any way limited to the embodiment described above: a number of possibilities for modifications of it should be obvious for one skilled in the arts, without it for this reason deviating from the scope of the invention as it has been defined in the attached claims.

With respect to the cooling system according to the invention, it may, of course, demonstrate further components than those shown in Figure 4, such as a retarder placed in the cooling circuit between the engine and the thermostat arrangement, which retarder is used to supplement ordinary brakes when braking heavy wheeled vehicles, and further thermostat arrangements placed in the cooling circuit.

The flow-retarding forms of the surfaces that define a section of channel on the opening of the connection between the inlet channel and the first outlet channel and that belong to the two plate elements may have another appearance than that shown in the embodiment described above. It would be possible, for example, for them to extend according to a zigzag form, such that the two plate elements form teeth that interact with each other. A further possibility is that these surfaces demonstrate small protrusions that point towards the other of these surfaces, and it would be possible to combine this embodiment with that the surfaces define an extent of the said section of channel that extends the flow pathway, by, for example, extending in a meandering manner as is shown in Figure 2.

## Claims

1. A thermostat arrangement for a cooling system for a motor vehicle, which thermostat arrangement comprises:
• an inlet channel (3) intended for the reception of cooling fluid that has circulated around a combustion engine (32) of the motor vehicle,
• a first outlet channel (5) that is connected to the said inlet channel (3) and from which cooling fluid is intended to be led to a cooler (34) of the said cooling system,
• a second outlet channel (6) that is connected to the said inlet channel (3) and from which cooling fluid is intended to be returned to the combustion engine (32) without passage through the said cooler (34),
• a valve body (9) that can be displaced between different positions for the regulation of the flow of cooling fluid from the said inlet channel (3) to the said outlet channels (5, 6),
• a temperature-dependent activation element (10), and
• a part (12) that can be displaced designed such that during displacement of the same it carries with it the valve body,
whereby the activation element is arranged to influence the displaceable position of the said part (12) and thus of the valve body (9) depending on the temperature of the cooling fluid that is received through the said inlet channel (3), whereby the valve body demonstrates a valve device in the form of a first plate element (15) that when at a first end position of the valve body is in contact with a valve seating between the inlet channel (3) and a second plate element (16) that forms the first outlet channel (5) in order to prevent through this contact cooling fluid from flowing from the inlet channel to the first outlet channel, and whereby the first plate element (15) is arranged such that it can be displaced under the influence of the activation element (10) away from its contact with the second plate element (16) in order to open a connection between the inlet channel and the first outlet channel, whereby the two plate elements (15, 16) are designed to form on displacement of the same away from the said position of contact the said connection in the form of a section (22) of channel defined by surfaces (23, 24) of the two plate element (15, 16) that are turned to face each other and demonstrate flow-retarding forms, **characterised in that** the said flow-retarding forms comprise the said surfaces (23, 24) that essentially follow each other when in the said position of contact, that the said surfaces (23, 24) define an extent of the section (22) of channel that forms the said connection that extends the flow pathway and **in that** the said surfaces (23, 24) of the plate elements (15, 16) demonstrate wave-shaped forms that essentially follow each other when in the position of contact in order to form during the opening phase of the opening of the said connection a wave-shaped meandering section (22) of channel between the inlet channel (3) and the first outlet channel (5).

2. The thermostat arrangement according to claim 1, **characterised in that** the said surfaces (23, 24) of the plate elements (15, 16) have been given a profile such that they force the cooling fluid close to them to changes of direction during the opening of the said connection.

3. The thermostat arrangement according to claim 1 or 2, **characterised in that** the extent of the said section (22) of channel at the beginning of a displacement of the plate elements (15, 16) away from the said condition of contact is at least twice, 2-6 times, or 2-4 times longer than the length of a straight line between opposite ends of the section of channel.

4. The thermostat arrangement according to any one of the preceding claims, **characterised in that** the valve body (9) comprises a second valve device (19) that can be received when at a second end position of the valve body in a second valve seating (20) in order in this way to prevent cooling fluid from flowing from the said inlet channel (3) to the second outlet channel (6).

5. The thermostat arrangement according to any one of the preceding claims, **characterised in that** the valve body (9) can be displaced from the said first end position in a direction away from the same under the influence of the activation element (10) and against the influence of the spring force of a spring means (17) that acts on the valve body.

6. The thermostat arrangement according to any one of the preceding claims, **characterised in that** the activation element comprises a wax body (11).

7. A cooling system for a motor vehicle comprising a cooling circuit (31) for the cooling of a combustion engine (32) in the vehicle by means of a cooling fluid that flows around the cooling circuit, which cooling circuit comprises:
• a cooling fluid pump (33) for the circulation of the cooling fluid in the cooling circuit, and
• a cooler (34) connected into the cooling circuit for the cooling of the cooling fluid, whereby this cooler comprises a cooling fluid inlet (35) that is connected to a cooling fluid outlet (36) of the combustion engine (32) through a first line (37) of the cooling circuit, and a cooling fluid outlet (38) that is connected to a cooling fluid inlet (39) of the combustion engine through a second line (40) of the cooling circuit,
**characterised in that** the cooling system comprises a thermostat arrangement (1) according to any one of claims 1-6 in the said first line (37), whereby:
- the said inlet channel (3) of the thermostat arrangement is connected to the cooling fluid outlet (36) of the combustion engine,
- the said first outlet channel (5) of the thermostat arrangement is connected to the cooling fluid inlet (35) of the cooler, and
- the said second outlet channel (6) of the thermostat arrangement is connected to the cooling fluid inlet (39) of the combustion engine,

8. A motor vehicle, in particular a wheeled motor vehicle, and in particular a lorry or bus, **characterised in that** it comprises a thermostat arrangement according to any one of claims 1-6.

## Patentansprüche

1. Thermostatanordnung für ein Kühlsystem für ein Kraftfahrzeug, wobei die Thermostatanordnung umfasst:
• einen Einlasskanal (3), der zum Empfangen von Kühlflüssigkeit bestimmt ist, welche um einen Verbrennungsmotor (32) des Kraftfahrzeugs zirkuliert ist,
• einen ersten Auslasskanal (5), welcher mit dem Einlasskanal (3) verbunden ist und von welchem Kühlflüssigkeit zu einem Kühler (34) des Kühlsystems geführt werden soll,
• einen zweiten Auslasskanal (6), welcher mit dem Einlasskanal (3) verbunden ist und von welchem Kühlflüssigkeit zu dem Verbrennungsmotor (32) ohne Durchlaufen des Kühlers (34) zurückkehren soll,
• einen Ventilkörper (9), welcher zwischen verschiedenen Positionen versetzt werden kann zum Regulieren des Flusses von Kühlflüssigkeit von dem Einlasskanal (3) zu den Auslasskanälen (5, 6),
• ein temperaturabhängiges Aktivierungselement (10), und
• ein versetzbares Bauelement (12), das so eingerichtet ist, dass es während seiner Versetzung den Ventilkörper mitführt,
wobei das Aktivierungselement eingerichtet ist, um die versetzbare Position des Bauelements (12), und somit des Ventilkörpers (9), abhängig von der Temperatur der Kühlflüssigkeit zu beeinflussen, welche durch den Einlasskanal (3) empfangen wird, wobei der Ventilkörper eine Ventilvorrichtung in der Form eines ersten Plattenelements (15) aufweist, welches an einer ersten Endpositionen des Ventilkörpers im Kontakt mit einer Ventilaufnahme zwischen dem Einlasskanal (3) und einem zweiten Plattenelement (16) steht, welches den ersten Auslasskanal (5) bildet, um durch diesen Kontakt Kühlflüssigkeit daran zu hindern, von dem Einlasskanal zu dem ersten Auslasskanal zu fließen, und wobei das erste Plattenelement (15) so angeordnet ist, dass es unter dem Einfluss des Aktivierungselements (10) von seinem Kontakt mit dem zweiten Plattenelement (16) weg versetzt werden kann, um eine Verbindung zwischen dem Einlasskanal und dem ersten Auslasskanal zu öffnen, wobei die zwei Plattenelemente (15, 16) vorgesehen sind, um auf Versetzung derselben weg von der Kontaktposition die Verbindung in Form eines Kanalabschnitts (22) zu bildet, welcher durch Oberflächen (23, 24) der zwei Plattenelemente (15, 16) bestimmt ist, welche derart gedreht sind, um einander zugewandt zu sein, und um flussverlangsamende Formen aufzuweisen, **dadurch gekennzeichnet, dass** die flussverlangsamenden Formen die Oberflächen (23, 24) umfassen, welche sich gegenseitig im Wesentlichen folgen, wenn sie in der Kontaktposition sind, dass die Oberflächen (23, 24) eine Erweiterung des Kanalabschnitts (22) bestimmen, welcher die den Flussweg erweiternde Verbindung bildet, und dass die Oberflächen (23, 24) der Plattenelemente (15, 16) wellengeformte Formen aufweisen, welche sich gegenseitig im Wesentlichen folgen, wenn sie in der Kontaktposition sind, um einen wellengeformten schlängelnden Kanalabschnitt (22) zwischen dem Einlasskanal (3) und dem ersten Auslasskanal (5) zu bilden, während der Eröffnungsphase der Öffnung der Verbindung.

2. Thermostatanordnung nach Anspruch 1, **dadurch gekennzeichnet, dass** die Oberflächen (23, 24) der Plattenelemente (15, 16) ein Profil derart aufweisen, dass sie die Kühlflüssigkeit nah an sich zwingen, um die Richtungen während des Öffnens der Verbindung zu verändern.

3. Thermostatanordnung nach Anspruch 1 oder 2, **dadurch gekennzeichnet, dass** die Erweiterung des Kanalabschnitts (22) zu Beginn einer Versetzung der Plattenelemente (15, 16) weg von dem Kontaktzustand mindestens zweimal, 2-6 mal oder 2-4 mal länger als die Länge einer geraden Linie zwischen gegenüberliegenden Seiten des Kanalabschnitts ist.

4. Thermostatanordnung nach einem der vorhergehenden Ansprüche, **dadurch gekennzeichnet, dass** der Ventilkörper (9) eine zweite Ventilvorrichtung (19) umfasst, welche an einer zweiten Endpositionen des Ventilkörpers in einer zweiten Ventilaufnahme (20) empfangen werden kann, um Kühlflüssigkeit daran zu hindern, von dem Einlasskanal (3) zu dem zweiten Auslasskanal (6) zu fließen.

5. Thermostatanordnung nach einem der vorherigen Ansprüche, **dadurch gekennzeichnet, dass** der Ventilkörper (9) von der ersten Endpositionen in eine Richtung weg von derselben unter Einfluss des Aktivierungselements (10) und gegen den Einfluss einer Federkraft eines auf den Ventilkörper wirkenden Federungsmittels (17) versetzt werden kann.

6. Thermostatanordnung nach einem der vorherigen Ansprüche, **dadurch gekennzeichnet, dass** das Aktivierungselement einen Wachskörper (11) umfasst.

7. Kühlsystem für ein Kraftfahrzeug, das einen Kühlkreislauf (31) umfasst, zum Kühlen eines Verbrennungsmotors (32) in dem Fahrzeug durch eine Kühlflüssigkeit, welche in den Kühlkreislauf fließt, wobei der Kühlkreislauf umfasst:
• eine Kühlflüssigkeitspumpe (33) zum Zirkulieren der Kühlflüssigkeit in dem Kühlkreislauf, und
• einen mit dem Kühlkreislauf verbundenen Kühler (34), zum Kühlen der Kühlflüssigkeit, wobei dieser Kühler einen Kühlflüssigkeitseinlass (35) umfasst, welcher mit einem Kühlflüssigkeitsauslass (36) des Verbrennungsmotors (32) durch eine erste Leitung (37) des Kühlkreislauf verbunden ist, und einen Kühlflüssigkeitsauslass (38), welcher mit einem Kühlflüssigkeitseinlass (39) des Verbrennungsmotors durch eine zweite Leitung (40) des Kühlkreislauf verbunden ist,
**dadurch gekennzeichnet, dass** das Kühlsystem in der ersten Leitung (37) eine Thermostatanordnung (1) nach einem der Ansprüche 1-6 umfasst, wobei:
- der Einlasskanal (3) der Thermostatanordnung mit dem Kühlflüssigkeitsauslass (36) des Verbrennungsmotors verbunden ist,
- der erste Auslasskanal (5) der Thermostatanordnung mit dem Kühlflüssigkeitseinlass (35) des Kühlers verbunden ist, und
- der zweite Auslasskanal (6) der Thermostatanordnung mit dem Kühlflüssigkeitseinlass (39) des Verbrennungsmotors verbunden ist.

8. Kraftfahrzeug, insbesondere bereiftes Kraftfahrzeug, und insbesondere Lastkraftwagen oder Bus, **dadurch gekennzeichnet, dass** es eine Thermostatanordnung nach einem der Ansprüche 1-6 umfasst.

## Revendications

1. Agencement de thermostat pour un système de refroidissement pour un véhicule à moteur, lequel agencement de thermostat comprend :
• un canal d'entrée (3) destiné à la réception de fluide de refroidissement qui a circulé autour d'un moteur à combustion (32) du véhicule à moteur,
• un premier canal de sortie (5) qui est raccordé audit canal d'entrée (3) et depuis lequel un fluide de refroidissement est destiné à être acheminé jusqu'à un refroidisseur (34) dudit système de refroidissement,
• un second canal de sortie (6) qui est raccordé audit canal d'entrée (3) et depuis lequel un fluide de refroidissement est destiné à être renvoyé au moteur à combustion (32) sans passer à travers ledit refroidisseur (34),
• un corps de clapet (9) qui peut être déplacé entre différentes positions pour la régulation de l'écoulement de fluide de refroidissement depuis ledit canal d'entrée (3) vers lesdits canaux de sortie (5, 6),
• un élément d'activation dépendant de la température (10), et
• une partie (12) qui peut être déplacée conçue de telle sorte que, durant le déplacement de celle-ci, elle transporte avec elle le corps de clapet,
moyennant quoi l'élément d'activation est agencé pour influer sur la position déplaçable de ladite partie (12) et ainsi du corps de clapet (9) en fonction de la température du fluide de refroidissement qui est reçu à travers ledit canal d'entrée (3), moyennant quoi le corps de clapet présente un dispositif de clapet sous la forme d'un premier élément de plaque (15) qui, lorsqu'il est dans une première position d'extrémité du corps de clapet, est en contact avec un siège de clapet entre le canal d'entrée (3) et un second élément de plaque (16) qui forme le premier canal de sortie (5) afin d'empêcher par le biais de ce contact le fluide de refroidissement de s'écouler depuis le canal d'entrée vers le premier canal de sortie, et moyennant quoi le premier élément de plaque (15) est agencé de telle sorte qu'il peut être déplacé sous l'influence de l'élément d'activation (10) loin de son contact avec le second élément de plaque (16) afin d'ouvrir un raccordement entre le canal d'entrée et le premier canal de sortie, moyennant quoi les deux éléments de plaque (15, 16) sont conçus pour former, lors du déplacement de ceux-ci loin de ladite position de contact, ledit raccordement sous la forme d'une section (22) de canal définie par des surfaces (23, 24) des deux éléments de plaque (15, 16) qui sont tournées pour se faire mutuellement face et présentent des formes de retardement d'écoulement, **caractérisé en ce que** lesdites formes de retardement d'écoulement comprennent lesdites surfaces (23, 24) qui se suivent essentiellement quand elles sont dans ladite position de contact, que lesdites surfaces (23, 24) définissent une étendue de la section (22) de canal qui forme ledit raccordement qui étend le chemin d'écoulement et **en ce que** lesdites surfaces (23, 24) des éléments de plaque (15, 16) présentent des formes ondulées qui se suivent essentiellement quand ils sont dans la position de contact afin de former, durant la phase d'ouverture de l'ouverture dudit raccordement une section sinueuse ondulée (22) de canal entre le canal d'entrée (3) et le premier canal de sortie (5).

2. Agencement de thermostat selon la revendication 1, **caractérisé en ce qu'**un profil a été donné auxdites surfaces (23, 24) des éléments de plaque (15, 16) de telle sorte qu'elles forcent le fluide de refroidissement proche d'elles à des changements de direction durant l'ouverture dudit raccordement.

3. Agencement de thermostat selon la revendication 1 ou 2, **caractérisé en ce que** l'étendue de ladite section (22) de canal au début d'un déplacement des éléments de plaque (15, 16) loin dudit état de contact est au moins 2 fois, de 2 à 6 fois, ou de 2 à 4 fois plus longue que la longueur d'une ligne droite entre les extrémités opposées de la section de canal.

4. Agencement de thermostat selon l'une quelconque des revendications précédentes, **caractérisé en ce que** le corps de clapet (9) comprend un second dispositif de clapet (19) qui peut être reçu, quand il est dans une seconde position d'extrémité du corps de clapet, dans un second siège de clapet (20) afin d'empêcher de cette façon un fluide de refroidissement de s'écouler depuis ledit canal d'entrée (3) vers le second canal de sortie (6).

5. Agencement de thermostat selon l'une quelconque des revendications précédentes, **caractérisé en ce que** le corps de clapet (9) peut être déplacé depuis ladite première position d'extrémité dans une direction loin de celle-ci sous l'influence de l'élément d'activation (10) et à l'encontre de l'influence de la force de rappel d'un moyen formant ressort (17) qui agit sur le corps de clapet.

6. Agencement de thermostat selon l'une quelconque des revendications précédentes, **caractérisé en ce que** l'élément d'activation comprend un corps de cire (11).

7. Système de refroidissement pour un véhicule à moteur comprenant un circuit de refroidissement (31) pour le refroidissement d'un moteur à combustion (32) dans le véhicule au moyen d'un fluide de refroidissement qui s'écoule autour du circuit de refroidissement, lequel circuit de refroidissement comprend :
• une pompe à fluide de refroidissement (33) pour la circulation du fluide de refroidissement dans le circuit de refroidissement, et
• un refroidisseur (34) raccordé dans le circuit de refroidissement pour le refroidissement du fluide de refroidissement, moyennant quoi ce refroidisseur comprend une entrée de fluide de refroidissement (35) qui est raccordée à une sortie de fluide de refroidissement (36) du moteur à combustion (32) par le biais d'une première conduite (37) du circuit de refroidissement, et une sortie de fluide de refroidissement (38) qui est raccordée à une entrée de fluide de refroidissement (39) du moteur à combustion par le biais d'une seconde conduite (40) du circuit de refroidissement,
**caractérisé en ce que** le système de refroidissement comprend un agencement de thermostat (1) selon l'une quelconque des revendications 1-6 dans ladite première conduite (37), moyennant quoi :
- ledit canal d'entrée (3) de l'agencement de thermostat est raccordé à la sortie de fluide de refroidissement (36) du moteur à combustion,
- ledit premier canal de sortie (5) de l'agencement de thermostat est raccordé à l'entrée de fluide de refroidissement (35) du refroidisseur, et
- ledit second canal de sortie (6) de l'agencement de thermostat est raccordé à l'entrée de fluide de refroidissement (39) du moteur à combustion,

8. Véhicule à moteur, en particulier véhicule à moteur à roues, et en particulier camion ou bus, **caractérisé en ce qu'**il comprend un agencement de thermostat selon l'une quelconque des revendications 1-6.
